(19) Europäisches Patentamt
European Patent Office
Office européen des brevets

(11) Numéro de publication : **0 013 636**
**B1**

(12) **FASCICULE DE BREVET EUROPÉEN**

(45) Date de publication du fascicule du brevet : **24.02.82**

(51) Int. Cl.[3] : **A 01 N 47/36**, A 01 N 47/30 // (A01N47/36, 43/54),(A01N47/30, 43/54)

(21) Numéro de dépôt : **80400005.7**

(22) Date de dépôt : **03.01.80**

(54) **Compositions herbicides à base de diamino-2,4 chloro-6 méthylthio-5 pyrimidine et de dérivés herbicides de l'urée et procédé de traitement des cultures à l'aide desdites compositions.**

(30) Priorité : **16.01.79 FR 7900956**

(43) Date de publication de la demande : **23.07.80 (Bulletin 80/15)**

(45) Mention de la délivrance du brevet : **24.02.82 Bulletin 82/08**

(84) Etats contractants désignés : **AT BE CH DE FR GB IT LU NL SE**

(56) Documents cités :
**EP - A - 0 000 681**
**CHEMICAL ABSTRACTS, vol. 90, no 7, 12th February 1979, page 614, no 54968y Colombus, Ohio, U.S.A.**

(73) Titulaire : **P C U K PRODUITS CHIMIQUES UGINE KUHLMANN**
**Service Propriété Industrielle Tour Manhattan**
**F-92087 PARIS LA DEFENSE 2 Cedex 21 (FR)**

(72) Inventeur : **Balde, Daniel Henry**
**13, rue Charles Friedel**
**F-75020 Paris (FR)**
Inventeur : **Boutemy, Gérard Emile Marcel**
**19 Chemin des Résistants**
**Oncy sur Ecole F-91490 Milly la Foret (FR)**

**EP 0 013 636 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Compositions herbicides à base de diamino-2,4 chloro-6 méthylthio-5 pyrimidine et de dérivés herbicides de l'urée et procédé de traitement des cultures à l'aide desdites compositions

La présente invention a pour objet des compositions herbicides contenant, en tant que matières actives, de la diamino-2,4 chloro-6 méthylthio-5 pyrimidine (composé dénommé A par la suite) ou un mélange des deux composés isomères diamino-2,4 chloro-6 méthylthio-5 pyrimidine (composé A) et diamino-4,6 chloro-2 méthylthio-5 pyrimidine (composé B) dans lequel le pourcentage du composé A est au moins 80 %, et un dérivé herbicide de l'urée choisi parmi le néburon, l'isoproturon, le chlortoluron, le métoxuron, le chlorbromuron et le méthabenzthiazuron, et un procédé de traitement des cultures de céréales à l'aide desdites compositions.

Le néburon, l'isoproturon, le chlortoluron, le métoxuron, le chlorbromuron et le méthabenzthiazuron sont des herbicides bien connus. Le composé diamino-2,4 chloro-6 méthyl-thio-5 pyrimidine a été décrit, en tant qu'herbicide, dans la demande de brevet au Japon n° 6 335/77 publiée le 15 août 1978 sous le numéro 92 789/78. Cette demande toutefois ne suggère pas d'associer le composé A aux dérivés herbicides de l'urée précédemment cités.

Dans les compositions herbicides selon l'invention le rapport en poids :

$$\frac{\text{composé A}}{\text{dérivé herbicide de l'urée}}$$

ou

$$\frac{\text{mélange des composés A et B}}{\text{dérivé herbicide de l'urée}}$$

va de $\frac{1}{10}$ à $\frac{1}{1}$ dans le cas du néburon et de $\frac{1}{10}$ à 10, de préférence de $\frac{1}{4}$ à 4 dans le cas de l'isoproturon, du chlortoluron, du métoxuron, du chlorbromuron ou du méthabenzthiazuron.

Outre les matières actives précédemment citées, les compositions selon l'invention peuvent contenir les additifs inertes (diluants solides ou liquides, dispersants, adjuvants, tensio-actifs, agents mouillants, etc...) habituellement utilisés en agriculture pour diluer les matières actives et faciliter leur mise en suspension aqueuse. De tels additifs inertes sont bien connus de l'homme de l'art. Comme tels on peut citer les diluants solides (talc, silice, kieselguhr, craie, terre de diatomées, argile, etc...), des diluants liquides (eau, huiles minérales, solvants organiques), des tensio-actifs anioniques ou non ioniques, etc... Les compositions selon l'invention peuvent se présenter en particulier sous forme de poudres mouillables, de poudres pour poudrage, de suspensions aqueuses stables, de solutions dans des solvants organiques, de granulés solides.

Pour préparer les compositions selon l'invention, on mélange intimement les divers constituants, c'est-à-dire la diamino-2,4 chloro-6 méthylthio-5 pyrimidine (ou le mélange des composés isomères A et B), le dérivé herbicide de l'urée et éventuellement les additifs inertes, les deux matières actives étant introduites dans les proportions indiquées précédemment.

Les compositions selon l'invention présentent un effet de synergie, c'est-à-dire que leur efficacité herbicide est nettement supérieure à celle que l'on pourrait attendre à partir des résultats obtenus avec le composé A (ou le mélange des composés A et B) seul et avec le dérivé herbicide de l'urée seul. Un tel effet est inattendu.

Les compositions selon l'invention conviennent pour le désherbage des céréales, en particulier du blé, de l'orge et de l'avoine. Pour le traitement des céréales les compositions selon l'invention sont formulées sous forme de bouillies aqueuses stables. Ces bouillies sont appliquées par pulvérisation, en pré-levée ou en post-levée de la plante cultivée. La dose totale de matières actives appliquée est de 1 000 à 3 200 g/ha dans le cas des compositions contenant le néburon, et de 1 000 à 5 000 g/ha dans le cas des compositions contenant l'isoproturon, le chlortoluron, le métoxuron, le chlorbromuron ou le méthabenzthiazuron.

Les exemples suivants illustrent l'invention sans la limiter. Les exemples 1 et 2 concernent la préparation des matières actives, les exemples 3 à 6 le traitement herbicide des cultures de céréales à l'aide des compositions selon l'invention.

## Exemple 1

Préparation d'un mélange des composés isomères A et B.

Dans un autoclave de 5 litres, on introduit 1 300 g de trichloro-2,4,6 méthylthio-5 pyrimidine, 1 700 ml d'isopropanol et 495 g d'ammoniac. On chauffe pendant 5 heures à 100 °C. Après refroidissement à la température ambiante, on recueille par filtration le précipité formé, on le lave avec 700 ml d'isopropanol puis avec de l'eau, et on le sèche. On obtient ainsi 1 010 g d'un mélange de diamino-2,4 chloro-6

méthylthio-5 pyrimidine (composé A) et de diamino-4,6 chloro-2 méthylthio-5 pyrimidine (composé B).

Ce mélange fond à 160 °C. Son analyse par chromatographie en couche mince sur silice (élution par un mélange chloroforme/méthanol 90/10), par chromatographie en phase gazeuse couplée avec la spectrométrie de masse, par spectrométrie dans l'infrarouge et par résonance magnétique nucléaire du carbone 13 montre qu'il contient approximativement 89 % de composé A et 11 % de composé B.

Exemple 2

Préparation d'un mélange des composés A et B enrichi en composé B.

1re étape

Dans 500 ml d'eau contenant 1,2 g de PLURONIC L 92® (agent tensio-actif non ionique constitué par un copolymère d'oxyde d'éthylène et d'oxyde de propylène) on disperse par agitation 46 g de trichloro-2,4,6 méthylthio-5 pyrimidine finement broyée. Puis on introduit en 10 minutes 170 g d'une solution aqueuse d'ammoniac à 20 %, en maintenant la température à 5 °C. On laisse ensuite une nuit à la température ambiante, puis on filtre le précipité formé et le lave à l'eau. On recueille ainsi 42 g d'un produit qui est un mélange des deux composés isomères dichloro-4,6 amino-2 méthylthio-5 pyrimidine et dichloro-2,6 amino-4 méthylthio-5 pyrimidine, ainsi que le montre en particulier l'analyse par résonance magnétique nucléaire du carbone 13.

2e étape

40 g du mélange obtenu dans la 1re étape sont dissous dans 700 ml d'acide chlorhydrique concentré. A la solution obtenue on ajoute 200 ml d'eau. Il se forme un précipité a) que l'on sépare par filtration. On ajoute au filtrat 120 ml d'eau. Il se forme un nouveau précipité b) que l'on sépare par filtration. On ajoute enfin au filtrat 260 ml d'eau puis 200 ml d'une solution $\frac{N}{10}$ d'hydroxyde de sodium. Il se forme un précipité c) que l'on sépare par filtration.

Le précipité a) (poids 6 g) est constitué essentiellement du composé dichloro-4,6 amino-2 méthylthio-5 pyrimidine. Le précipité c) (poids 17,2 g) est constitué du composé dichloro-2,6 amino-4 méthylthio-5 pyrimidine.

3e étape

Dans un autoclave on introduit 16,5 g du précipité c) obtenu à la 2e étape, 150 ml d'isopropanol et 17 g d'ammoniac. On chauffe à 100 °C pendant 3 heures et 15 minutes. Après refroidissement on filtre le précipité formé. On obtient ainsi 11,3 g d'un produit qui est un mélange des deux composés A et B. La teneur en composé B du mélange est de 20 %.

Exemple 3

Traitement herbicide du blé (application de post-levée).

Les matières actives employées sont soit le néburon seul, soit le mélange de composés A et B de l'exemple 1 seul, soit un mélange des deux matières actives précédentes dans le rapport pondéral :

$$\frac{\text{Mélange de composés A et B de l'exemple 1}}{\text{néburon}} = \frac{3}{10}$$

Ces matières actives sont formulées sous forme de poudres mouillables ayant les compositions suivantes :

— poudre mouillable 1 (pour le néburon seul) : poudre mouillable à 60 % en poids de matière active connue sous la marque de commerce « Kloben C ».

— poudre mouillable 2 (pour le mélange A + B seul) : poudre mouillable contenant en poids 80 % du mélange A + B de l'exemple 1,10 % de talc, 6 % de silice, 3 % de méthylnaphtalène-sulfonate de sodium (dispersant) et 1 % du polyéthoxyéther d'alcool gras connu sous la marque de commerce REMCOPAL L02B (agent adhésif non ionique).

— poudre mouillable 3 (pour le mélange des deux matières actives dans le rapport pondéral $\frac{3}{10}$) : poudre mouillable contenant 3,75 parties en poids de poudre mouillable 2 pour 16,66 parties en poids de

poudre mouillable 1.

Les poudres mouillables 1, 2 et 3 sont diluées dans l'eau avant emploi et les bouillies ainsi obtenues sont pulvérisées en plein champ, à raison de 1 000 l/ha, sur des cultures de blé d'hiver variété « Talent » au stade début tallage (4 feuilles) infestées de graminées et dicotylédones adventices diverses (Poa sp., Agrostis sp., Ranunculus sp., Veronica sp. etc...). Les dilutions sont calculées de façon à apporter les doses de matière active indiquées dans les tableaux ci-après.

30 jours, puis 60 jours après l'application des bouillies on évalue d'une part l'efficacité herbicide vis-à-vis des plantes adventices et d'autre part le degré de phytotoxicité vis-à-vis de la plante cultivée. L'efficacité herbicide est exprimée par le pourcentage de destruction globale des plantes adventices, l'indice O étant affecté par convention au témoin non traité et l'indice 100 correspondant à une destruction totale des plantes adventices. Le degré de phytotoxicité vis-à-vis de la plante cultivée est exprimé par une note de 0 à 10,0 correspondant à une plante indemne et 10 à une plante détruite. Les résultats obtenus sont rassemblés dans les tableaux ci-dessous.

| Matière active | Dose de matière active appliquée (g/ha) | Degré de phytotoxicité vis-à-vis de la plante cultivée | |
|---|---|---|---|
| | | 30 j. | 60 j. |
| Néant (témoin non traité) | 0 | 0 | 0 |
| Néburon | 1 000 | 0 | 0 |
| Néburon | 2 000 | 1 | 0 |
| Mélange A + B de l'exemple 1 | 300 | 0,5 | 0 |
| Idem | 600 | 1 | 0 |
| Mélange A + B de l'exemple 1 + néburon | 300 + 1 000 | 0,5 | 0 |
| Idem | 600 + 2 000 | 1 | 0 |

| Matière active | Dose de matière active appliquée (g/ha) | Efficacité herbicide vis-à-vis des plantes adventices | |
|---|---|---|---|
| | | 30 j. | 60 j. |
| Néant (témoin non traité) | 0 | 0 | 0 |
| Néburon | 1 000 | 20 | 20 |
| Néburon | 2 000 | 40 | 40 |
| Mélange A + B de l'exemple 1 | 300 | 30 | 30 |
| Idem | 600 | 55 | 60 |
| Mélange A + B de l'exemple 1 + néburon | 300 + 1 000 | 70 | 75 |
| Idem | 600 + 2 000 | 90 | 90 |

Les résultats du tableau ci-dessus concernant l'efficacité herbicide permettent de mettre en évidence, pour les associations mélange A + B de l'exemple 1 + néburon, un effet de synergie net. En effet les valeurs calculées auxquelles conduiraient pour les associations mélange A + B de l'exemple 1 + néburon les résultats obtenus avec le mélange A + B seul et le néburon seul sont nettement inférieures aux valeurs réelles obtenues, ainsi que le montre le tableau suivant :

| Matière active | Dose de matière active appliquée (g/ha) | Efficacité herbicide calculée | |
|---|---|---|---|
| | | 30 j. | 60 j. |
| Mélange A + B de l'exemple 1 + néburon | 300 + 1 000 | 44 | 44 |
| Idem | 600 + 2 000 | 73 | 76 |

Les valeurs calculées sont obtenues à l'aide de la formule

$$P_{XY} = P_X + P_Y - \frac{P_X P_Y}{100}$$

dans laquelle $P_{XY}$ est le pourcentage de plantes adventices que l'on peut s'attendre à voir détruites par mg/ha d'un herbicide X + n g/ha d'un herbicide Y, $P_X$ est le pourcentage de plantes adventices détruites par m g/ha de l'herbicide X et $P_Y$ le pourcentage de plantes adventices détruites par n g/ha de l'herbicide Y.

Exemple 4

Traitement herbicide du blé (application de post-levée).

Le mode opératoire est le même qu'à l'exemple 3, sauf que les bouillies sont appliquées par pulvérisation en plein champ sur des cultures de blé d'hiver variété « Champlein » au stade début tallage, infestées de graminées et dicotylédones adventices diverses (alopecurus myosuroides, matricaria sp., stellaria media, veronica sp., polygonum sp. etc...) et que l'efficacité herbicide est évaluée séparément vis-à-vis des graminées et vis-à-vis des dicotylédones.

Les résultats obtenus sont rassemblés dans les tableaux suivants :

| Matière active | Dose de matière active appliquée (g/ha) | Degré de phytotoxicité vis-à-vis de la plante cultivée | |
|---|---|---|---|
| | | 30 j. | 60 j. |
| Néant (témoin non traité) | 0 | 0 | 0 |
| Néburon | 1 000 | 0 | 0 |
| Néburon | 2 000 | 1 | 0 |
| Mélange A + B de l'exemple 1 | 300 | 0 | 0 |
| Idem | 600 | 0,5 | 0 |
| Mélange A + B de l'exemple 1 + néburon | 300 + 1 000 | 0 | 0 |
| Idem | 600 + 2 000 | 1 | 0 |

| Matière active | Dose de matière active appliquée (g/ha) | Efficacité herbicide vis-à-vis des plantes adventices évaluée 60 jours après le traitement | |
|---|---|---|---|
| | | Graminées | Dicotylédones |
| Néant (témoin non traité)) | 0 | 0 | 0 |
| Néburon | 1 000 | 20 | 75 |
| Néburon | 2 000 | 50 | 88 |
| Mélange A + B de l'exemple 1 | 300 | 30 | 45 |
| Idem | 600 | 50 | 70 |
| Mélange A + B de l'exemple 1 + néburon | 300 + 1 000 | 60 | 89 |
| Idem | 600 + 2 000 | 90 | 98 |

Les résultats du tableau ci-dessus concernant l'efficacité herbicide permettent de mettre en évidence, pour les associations mélange A + B de l'exemple 1 + néburon, un effet de synergie net, tout particulièrement sur graminées. En effet les valeurs calculées auxquelles conduiraient pour les associations mélange A + B de l'exemple 1 + néburon les résultats obtenus avec le mélange A + B seul et le néburon seul sont nettement inférieures aux valeurs réelles obtenues, ainsi que le montre le tableau suivant :

| Matière active | Dose de matière active appliquée (g/ha) | Efficacité herbicide calculée | |
|---|---|---|---|
| | | Graminées | Dicotylédones |
| Mélange A + B de l'exemple 1 + néburon | 300 + 1 000 | 44 | 86,2 |
| Idem | 600 + 2 000 | 75 | 93,4 |

Les valeurs calculées sont obtenues à l'aide de la formule indiquée à l'exemple 3.

Exemple 5

Traitement herbicide du blé (application de pré-levée).

Les matières actives (néburon seul, mélange A + B de l'exemple 1 seul, néburon + mélange A + B de l'exemple 1 dans le rapport pondéral $\frac{\text{Mélange A + B}}{\text{néburon}} = \frac{6}{10}$) sont formulées sous forme de poudres mouillables comme indiqué à l'exemple 3. Pour la constitution de la poudre mouillable contenant simultanément le néburon et le mélange A + B de l'exemple 1 dans le rapport pondéral $\frac{\text{Mélange A + B}}{\text{néburon}} = \frac{6}{10}$, on mélange 7,50 parties en poids de poudre 2 avec 16,66 parties en poids de poudre 1.

Les poudres mouillables sont diluées dans l'eau et les bouillies obtenues sont pulvérisées en plein champ, à raison de 1 000 l/ha, en pré-levée, sur des semis de blé d'hiver variété « Lutin ». Les dilutions sont calculées de façon à apporter les doses de matière active indiquées dans les tableaux ci-après.

30 jours, 60 jours et 120 jours après l'application des bouillies en évalue l'efficacité herbicide vis-à-vis des plantes adventices (alopecurus myosuroides, stellaria media, veronica sp., matricaria sp., lamium sp. etc...) et le degré de phytotoxicité vis-à-vis de la plante cultivée suivant les échelles de notation indiquées à l'exemple 3.

Les résultats obtenus sont rassemblés dans les tableaux suivants :

| Matière active | Dose de matière active appliquée (g/ha) | Degré de phytotoxicité vis-à-vis de la plante cultivée | | |
|---|---|---|---|---|
| | | 30 j. | 60 j. | 120 j. |
| Néant (témoin non traité) | 0 | 0 | 0 | 0 |
| Néburon | 1 000 | 0 | 0 | 0 |
| Néburon | 2 000 | 0 | 0 | 0 |
| Mélange A + B de l'exemple 1 | 600 | 0 | 0 | 0 |
| Idem | 1 200 | 0 | 0 | 0 |
| Mélange A + B de l'exemple 1 + néburon | 600 + 1 000 | 0 | 0 | 0 |
| Idem | 1 200 + 2 000 | 0 | 0 | 0 |

| Matière active | Dose de matière active appliquée (g/ha) | Efficacité herbicide vis-à-vis des plantes adventices | | |
|---|---|---|---|---|
| | | 30 j. | 60 j. | 120 j. |
| Néant (témoin non traité) | 0 | 0 | 0 | 0 |
| Néburon | 1 000 | 35 | 30 | 30 |
| Néburon | 2 000 | 60 | 55 | 60 |
| Mélange A + B de l'exemple 1 | 600 | 40 | 40 | 35 |
| Idem | 1 200 | 60 | 70 | 70 |
| Mélange A + B de l'exemple 1 + néburon | 600 + 1 000 | 50 | 55 | 50 |
| Idem | 1 200 + 2 000 | 85 | 95 | 90 |

Exemple 6

Traitement herbicide du blé (application de post-levée).

Les matières actives utilisées sont :
— l'isoproturon seul
— le chlortoluron seul
— le métoxuron seul
— le chlorbromuron seul
— le méthabenzthiazuron seul
— le mélange des composés A et B de l'exemple 1 seul (mélange appelé par la suite produit de l'exemple 1)
— un mélange du produit de l'exemple 1 avec l'isoproturon dans le rapport pondéral :

$$\frac{\text{produit de l'exemple 1}}{\text{isoproturon}} = \frac{6}{10}$$

— un mélange du produit de l'exemple 1 avec l'isoproturon dans le rapport pondéral :

$$\frac{\text{produit de l'exemple 1}}{\text{isoproturon}} = \frac{6}{20}$$

— un mélange du produit de l'exemple 1 avec le chlortoluron dans le rapport pondéral :

$$\frac{\text{produit de l'exemple 1}}{\text{chlortoluron}} = \frac{6}{12,5}$$

— un mélange du produit de l'exemple 1 avec le métoxuron dans le rapport pondéral :

$$\frac{\text{produit de l'exemple 1}}{\text{métoxuron}} = \frac{6}{16}$$

— un mélange du produit de l'exemple 1 avec le chlorbromuron dans le rapport pondéral :

$$\frac{\text{produit de l'exemple 1}}{\text{chlorbromuron}} = \frac{6}{5}$$

— un mélange du produit de l'exemple 1 avec le méthabenzthiazuron dans le rapport pondéral :

$$\frac{\text{produit de l'exemple 1}}{\text{méthabenzthiazuron}} = \frac{6}{10}$$

Ces matières actives sont formulées sous la forme de poudres mouillables. Pour l'isoproturon, le chlortoluron, le métoxuron, le chlorbromuron et le méthabenzthiazuron ces poudres mouillables sont les produits disponibles dans le commerce. Pour le produit de l'exemple 1 la poudre mouillable est la poudre mouillable 2 de l'exemple 3. Les poudres mouillables contenant simultanément le produit de l'exemple 1 et l'isoproturon, le chlortoluron, le métoxuron, le chlorbromuron ou le méthabenzthiazuron sont préparées en mélangeant les quantités convenables de poudre 2 de l'exemple 3 et de poudre contenant le dérivé herbicide de l'urée.

Les poudres mouillables sont diluées dans l'eau avant utilisation et les bouillies ainsi obtenues sont pulvérisées, à raison de 1 000 litres par hectare, en post-levée de la plante cultivée, sur des cultures de blé d'hiver (variété « Lutin ») au stade trois feuilles, infestées de plantes adventices diverses (Alopecurus myosuroides, Lolium sp, Apera spica venti, Veronica sp, Stellaria media, Matricaria chamomilla, Viola tricolor, Papaver rhoeas, Raphanus raphanistrum, etc...). Les dilutions sont calculées de manière à appliquer les doses de matière active indiquées dans le tableau ci-après.

60 jours après l'application des bouillies, on compte les plantes adventices dans chaque parcelle. On déduit de ce comptage l'efficacité herbicide vis-à-vis des plantes adventices. Cette efficacité herbicide est exprimée par le pourcentage de destruction des plantes adventices. L'indice 100 correspond à une destruction totale des plantes adventices, l'indice 0 à l'état des plantes adventices dans les parcelles

témoins non traitées, c'est-à-dire à une destruction nulle.

Les résultats obtenus sont rassemblés dans le tableau suivant :

| Matière active | Dose de matière active appliquée (g/ha) | Efficacité herbicide vis-à-vis des plantes adventices | |
|---|---|---|---|
| | | Trouvée | Calculée |
| Isoproturon | 1 000 | 65 | |
| Isoproturon | 2 000 | 88 | |
| Chlortoluron | 1 250 | 60 | |
| Métoxuron | 1 600 | 50 | |
| Chlorbromuron | 500 | 50 | |
| Méthabenzthiazuron | 1 000 | 60 | |
| Produit de l'exemple 1 | 600 | 16 | |
| Produit de l'exemple 1 + isoproturon | 600 + 1 000 | 100 | 71 |
| Produit de l'exemple 1 + isoproturon | 600 + 2 000 | 100 | 90 |
| Produit de l'exemple 1 + chlortoluron | 600 + 1 250 | 100 | 75 |
| Produit de l'exemple 1 + métoxuron | 600 + 1 600 | 90 | 58 |
| Produit de l'exemple 1 + chlorbromuron | 600 + 500 | 90 | 58 |
| Produit de l'exemple 1 + méthabenzthiazuron | 600 + 1 000 | 90 | 66 |

Les valeurs calculées qui apparaissent dans le tableau ci-dessus ont été obtenues au moyen de la formule

$$P_{XY} = P_X + P_Y - \frac{P_X P_Y}{100}$$

indiquée à l'exemple 3.

En comparant les valeurs calculées aux valeurs réelles trouvées on voit que les compositions contenant simultanément le produit de l'exemple 1 et l'isoproturon, le chlortoluron, le métoxuron, le chlorbromuron ou le méthabenzthiazuron présentent un effet de synergie net.

**Revendications**

1. Compositions herbicides caractérisées en ce qu'elles contiennent simultanément, comme matières actives, de la diamino-2,4 chloro-6·méthylthio-5 pyrimidine ou un mélange des deux composés isomères diamino-2,4 chloro-6 méthylthio-5 pyrimidine et diamino-4,6 chloro-2 méthylthio-5 pyrimidine dans lequel le pourcentage du premier de ces composés est au moins 80 %, et un dérivé herbicide de l'urée choisi parmi le néburon de formule

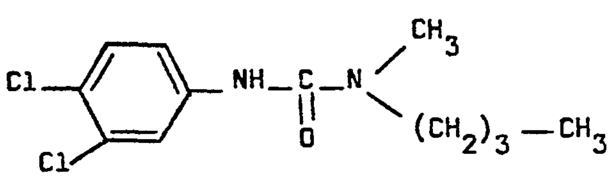

l'isoproturon de formule

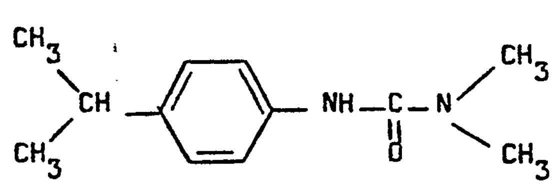

le chlortoluron de formule

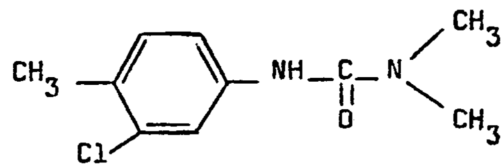

le métoxuron de formule

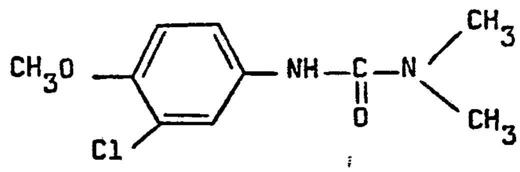

le chlorbromuron de formule

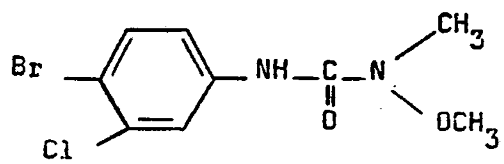

et le méthabenzthiazuron de formule

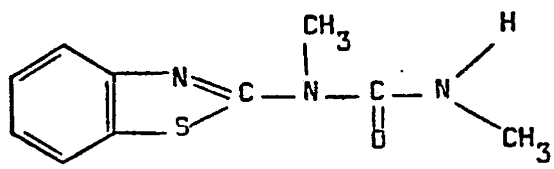

le rapport en poids

$$\frac{\text{diamino-2,4 chloro-6 méthylthio-5 pyrimidine}}{\text{dérivé herbicide de l'urée}}$$

ou

$$\frac{\text{mélange des deux composés isomères}}{\text{dérivé herbicide de l'urée}}$$

dans les compositions étant de $\frac{1}{10}$ à $\frac{1}{1}$ dans le cas où le dérivé herbicide de l'urée est le néburon, et de $\frac{1}{10}$ à 10, de préférence $\frac{1}{4}$ à 4, dans le cas où le dérivé herbicide de l'urée est l'isoproturon, le chlortoluron, le métoxuron, le chlorbromuron ou le méthabenzthiazuron.

2. Procédé de traitement herbicide des cultures de céréales, caractérisé en ce qu'il consiste à appliquer sur celles-ci, en pré-levée ou en post-levée de la plante cultivée, une composition telle que définie à la revendication 1 sous forme d'une bouillie aqueuse, la dose totale de matière active apportée allant de 1 000 à 3 200 g/ha dans le cas où le dérivé herbicide de l'urée est le néburon, et de 1 000 à 5 000 g/ha dans le cas où le dérivé herbicide de l'urée est l'isoproturon, le chlortoluron, le métoxuron, le chlorbromuron ou le méthabenzthiazuron.

**Claims**

1. Herbicidal compositions characterised in that they contain simultaneously, as active materials, 2,4-diamino-6-chloro-5-methylthio-pyrimidine or a mixture of the two isomeric compounds 2,4-diamino-6-chloro-5-methylthio-pyrimidine and 4,6-diamino-2-chloro-5-methyl-thio-pyrimidine in which the percentage of the first of these compounds is at least 80 %, and a herbicidal derivative of urea selected from the neburon of formula :

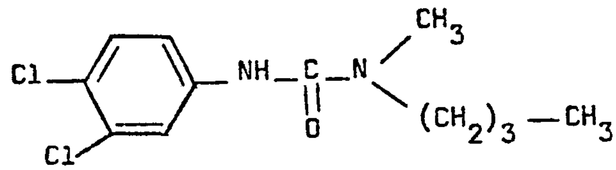

the isoproturon of formula

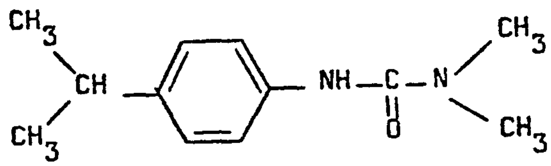

the chlortoluron of formula

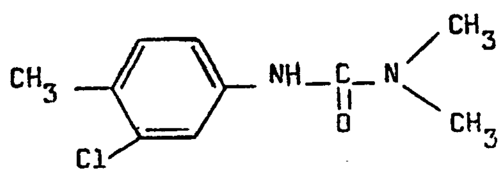

the metoxuron of formula

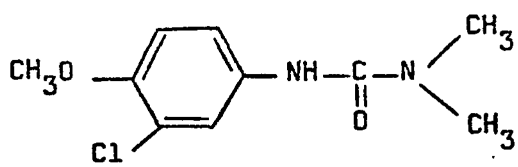

the chlorbromuron of formula

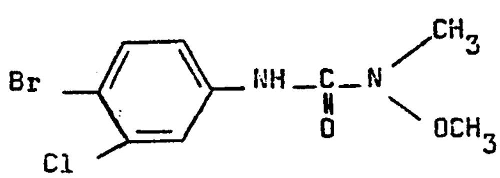

and the methabenzthiazuron of formula

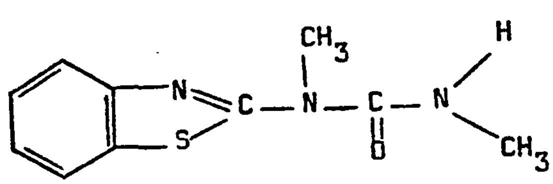

the ratio by weight

$$\frac{\text{2,4-diamino-6-chloro-5-methylthio-pyrimidine}}{\text{herbicidal derivative of urea}}$$

or

$$\frac{\text{mixture of the two isomeric compounds}}{\text{herbicidal derivative of urea}}$$

in the compositions being from 1/10 to 1/1 in the case where the herbicidal derivative of urea is neburon, and from 1/10 to 10, preferably 1/4 to 4, in the case where the herbicidal derivative of urea is isoproturon, chlortoluron, metoxuron, chlorbromuron or methabenzthiazuron.

2. Process for the herbicidal treatment of cereal crops, characterised in that it consists in applying to them, before or after sprouting of the cultivated plant, a composition such as defined in claim 1, in the form of an aqueous slurry, the total dose of active material applied being from 1 000 to 3 200 g/ha in the case where the herbicidal derivative of urea is neburon, and from 1 000 to 5 000 g/ha in the case where the herbicidal derivative of urea is isoproturon, chlortoluron, metoxuron, chlorbromuron or methabenzthiazuron.

**Ansprüche**

1. Herbizide Zubereitungen, dadurch gekennzeichnet, daß sie gleichzeitig als Wirkstoffe 2.4-Diamino-6-chlor-5-methylthiopyrimidin oder ein Gemisch der zwei isomeren Verbindungen 2.4-Diamino-6-chlor-5-methylthiopyrimidin und 4.6-Diamino-2-chlor-5-methylthiopyrimidin, wobei der Prozentsatz der ersten dieser Verbindungen mindestens 80 % beträgt, und ein herbizides Harnstoffderivat enthalten, ausgewählt aus dem Neburon der Formel :

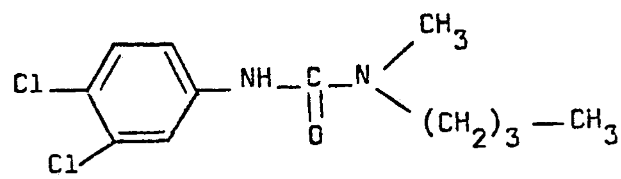

dem Isoproturon der Formel

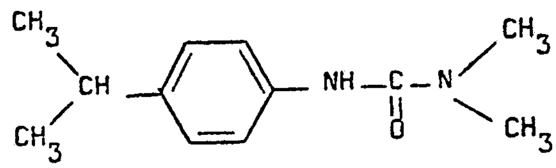

dem Chlortoluron der Formel

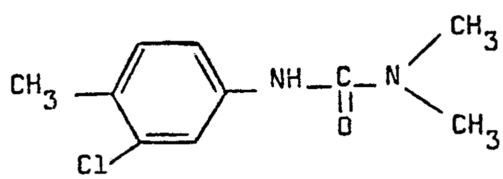

dem Metoxuron der Formel

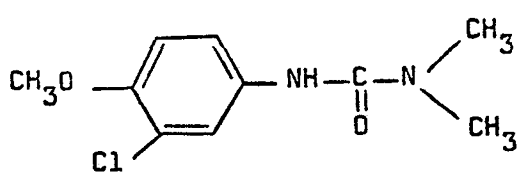

dem Chlorbromuron der Formel

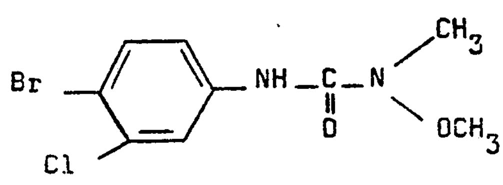

und dem Methabenzthiazuron der Formel

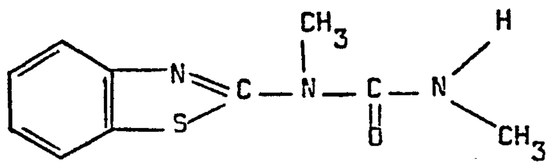

wobei das Gewichtsverhältnis

$$\frac{\text{2.4-Diamino-6-chlor-5-methylthiopyrimidin}}{\text{herbizides Harnstoffderivat}}$$

oder

$$\frac{\text{Gemisch der beiden isomeren Verbindungen}}{\text{herbizides Harnstoffderivat}}$$

in den Zubereitungen $\frac{1}{10}$ bis $\frac{1}{1}$ für den Fall beträgt, wo das herbizide Harnstoffderivat Neburon ist und $\frac{1}{10}$ bis 10, vorzugsweise $\frac{1}{4}$ bis 4, für den Fall beträgt, wo das herbizide Harnstoffderivat Isoproturon, Chlortoluron, Metoxuron, Chlorbromuron oder Methabenzthiazuron ist.

2. Herbizides Verfahren zur Behandlung von Getreidekulturen, dadurch gekennzeichnet, daß man auf diese vor oder nach dem Auflaufen der Kulturpflanze eine Zubereitung gemäß Anspruch 1 in Form eines wäßrigen Breies aufbringt, wobei die Gesamtmenge des aufgebrachten Wirkstoffs von 1 000 bis 3 200 g/ha in dem Fall, wo das herbizide Harnstoffderivat Neburon ist, und von 1 000 bis 5 000 g/ha in dem Fall beträgt, wo das herbizide Harnstoffderivat Isoproturon, Chlortoluron, Metoxuron, Chlorbromuron oder Methabenzthiazuron ist.